**Europäisches Patentamt**

**European Patent Office**

**Office européen des brevets**

(11) Veröffentlichungsnummer: **0 065 312**
**B1**

(12) # EUROPÄISCHE PATENTSCHRIFT

(45) Veröffentlichungstag der Patentschrift:
**24.10.84**

(51) Int. Cl.³: **F 16 D 65/12**

(21) Anmeldenummer: **82104344.5**

(22) Anmeldetag: **18.05.82**

(54) **Bremsscheibenanordnung für Scheibenbremseinrichtungen von Schienenfahrzeugen.**

(30) Priorität: **19.05.81 DE 3119913**
**18.08.81 DE 3132579**

(43) Veröffentlichungstag der Anmeldung:
**24.11.82 Patentblatt 82/47**

(45) Bekanntmachung des Hinweises auf die Patenterteilung:
**24.10.84 Patentblatt 84/43**

(84) Benannte Vertragsstaaten:
**DE FR GB IT**

(56) Entgegenhaltungen:
**DE - A - 2 828 109**
**FR - A - 2 266 052**
**FR - A - 2 287 623**
**FR - A - 2 429 932**

(73) Patentinhaber: **Knorr-Bremse GmbH, Moosacher Strasse 80, D-8000 München 40 (DE)**

(72) Erfinder: **Gebhardt, Hans, Auweg 43, D-8046 Garching (DE)**
Erfinder: **Wirth, Xaver, Dr., Birkhuhnweg 18, D-8045 Ismaning (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Bremsscheibenanordnung für Scheibenbremseinrichtungen von Schienenfahrzeugen, mit wenigstens einem Reibring, an welchem ein radial innen liegender, als Mitnehmersteg wirkender Flanschring ausgebildet ist, mit einem Spannring, welcher an einer Seite des Flanschringes anliegend diesen gegenüber der Welle der Bremsscheibenanordnung verspannt, mit einem Nabenring, welcher an der dem Spannring entgegengesetzten Seite des Flanschringes anliegt, und mit einem von der Welle radial auskragenden, einen zylindrischen Sitz aufweisenden Bund, an welchem der Flanschring mit Hilfe des Spannringes und des Nabenringes gehalten ist.

Derartige Bremsscheibenanordnungen ermöglichen das Abbremsen von Schienenfahrzeugen, insbesondere solchen, welche mit höheren Geschwindigkeiten laufen. Zur Erzielung einer ausreichenden Bremsleistung ist es möglich, mehrere derartige Bremsscheibenanordnungen an jeweils einer Welle vorzusehen.

Es ist eine Bremsscheibenanordnung gemäss dem Oberbegriff des Patentanspruches 1 bekannt (FR-A Nr. 2429932), bei welcher der Reibring einen nach innen gerichteten Flanschring mit beidseits ausgebildeten Ringflächen trägt. Die Ringflächen sind parallel zueinander und geneigt zur Reibringradialebene kegelmantelartig ausgebildet, derart, dass der Flanschring in einen Ringspalt zwischen einer komplementär geneigten, an einer Nabe ausgebildeten Ringfläche und einer Spannfläche eines Halte- oder Spannringes eingreift. Die Nabe dieser Bremsscheibe ist auf die Welle der Scheibenbremseinrichtung aufschrumpfbar. Der die Ringfläche zur Anlage des Flanschringes tragende Nabenabschnitt besitzt eine radiale Erstreckung, welche beträchtlich grösser ist als die, die dem Innendurchmesser des Flanschringes entspricht. Infolge des Eingriffs des Flanschringes in den komplementär ausgebildeten Ringspalt zwischen Spannring und Nabenabschnitt ist es demnach nicht möglich, einen einteiligen Reibring in beiden Richtungen von der tragenden Nabe abzuziehen. Dieser Problematik kommt besondere Bedeutung zu, wenn auf einer Welle der Scheibenbremseinrichtung mehrere Reibscheiben angebracht sind und wenn eine dieser Reibscheiben ausgetauscht werden soll. Darüber hinaus ist der Wellendurchmesser begrenzt durch die zum Aufschrumpfen benötigte Nabenwandstärke, was hinsichtlich geeigneter Dimensionierung gleichzeitig problematisch und nachteilig sein kann.

Davon ausgehend liegt der Erfindung die Aufgabe zugrunde, eine Bremsscheibenanordnung der in Rede stehenden Art so auszubilden, dass die Bremsscheibe in beiden axialen Richtungen von der Welle abgezogen werden kann.

Die Erfindung löst die Aufgabe dadurch, dass der Aussendurchmesser des zylindrischen Sitzes auf seiner gesamten Axiallänge höchstens so gross ist wie der Innendurchmesser des Flanschringes, und dass der Nabenring axial gesichert mittels einer lösbaren Befestigung am Flanschring angreift.

Die Bremsscheibenanordnung erlaubt es in vorteilhafter Weise, den Reibring bzw. mehrere derartige Reibringe in Axialrichtung vom Sitz des zugehörigen, mit der Welle verbundenen Bunds abzuziehen, da sowohl der Spannring als auch der Nabenring von der Bremsscheibe lösbar sind; der Spannring lässt sich in üblicher Weise nach dem Lösen der Schraubenverbindungen axial gerichtet abziehen, da sein Innendurchmesser im wesentlichen dem Innendurchmesser des kegelmantelartigen Flanschringes des Reibringes entspricht, während sich der Nabenring infolge seiner Segmentierung einzeln, d.h. abschnittweise lösen lässt, nachdem der Reibring bei abgenommenem Spannring etwas axial gerichtet versetzt wurde. Hierbei ist es ermöglicht, den Nabenring abzunehmen, obwohl er konstruktive Mittel für einen axialen Formschluss gegenüber der Welle besitzen kann, so nach einer Ausführungsform einen radial nach innen gerichteten Ansatz, der im Montagezustand in eine am Bund der Welle umlaufende Nut eingreift, während bei einer weiteren Ausführungsform hierfür ein Innengewinde am Nabenring vorgesehen ist, welches in ein Aussengewinde des Bunds eingreift. Bei mehrteiligem Aufbau des Nabenringes ist bei Verwendung von mehreren Scheibenfedern am Umfang sichergestellt, dass in Umfangsrichtung ein ausreichender Formschluss zwischen der Welle, dem Reibring und dem Nabenring besteht.

Der Aufbau derartiger Bremsscheiben eignet sich bevorzugt für Wellen mit Doppelbremsscheiben bzw. mehreren Reibringen, bei welchen es erforderlich sein kann, einen Austausch aller oder einzelner Reibringe vorzunehmen. Bei Verwendung des geteilten Nabenringes ist es möglich, den Reibring bzw. die Reibringe in beiden Axialrichtungen der Welle von dieser abzuziehen, wobei sich der Reibring auch über ggf. am Wellenende befindliche Flanschverbindungen oder Wellenteile abziehen lässt. Da die Welle keine an ihr aufzuschrumpfende Nabe trägt, sondern nur einen Bund mit zylindrischem Sitz, entfällt das Problem ausreichender Wellendimensionierung, welches bisher beim Aufschrumpfen von Nabenkörpern bestand. Mit anderen Worten, der Wellendurchmesser der Bremsscheibe ist bei Verwendung eines mehrteiligen Nabenringes nicht mehr durch die bisher zum Aufschrumpfen benötigte Nabenwandstärke begrenzt, was es ermöglicht, Wellen mit erhöhter Festigkeit für mehrfache Bremsscheibenanordnungen vorzusehen.

Vorteilhafte Ausgestaltungen und Weiterbildungen sind in weiteren Patentansprüchen aufgeführt.

Die Erfindung ist nachfolgend anhand eines Ausführungsbeispiels unter Bezugnahme auf die beigefügte Zeichnung erläutert.

Fig. 1 ist eine Darstellung einer Schnitthälfte einer Bremsscheibenanordnung nach der Erfindung;

Fig. 2 gibt in perspektivischer Explosivdarstellung den Spannring, den Reibring und den Nabenring in ihrer Relativlage zueinander wieder, und

Fig. 3 ist eine der Fig. 2 vergleichbare Ansicht einer weiteren Ausführungsform der Bremsscheibenanordnung.

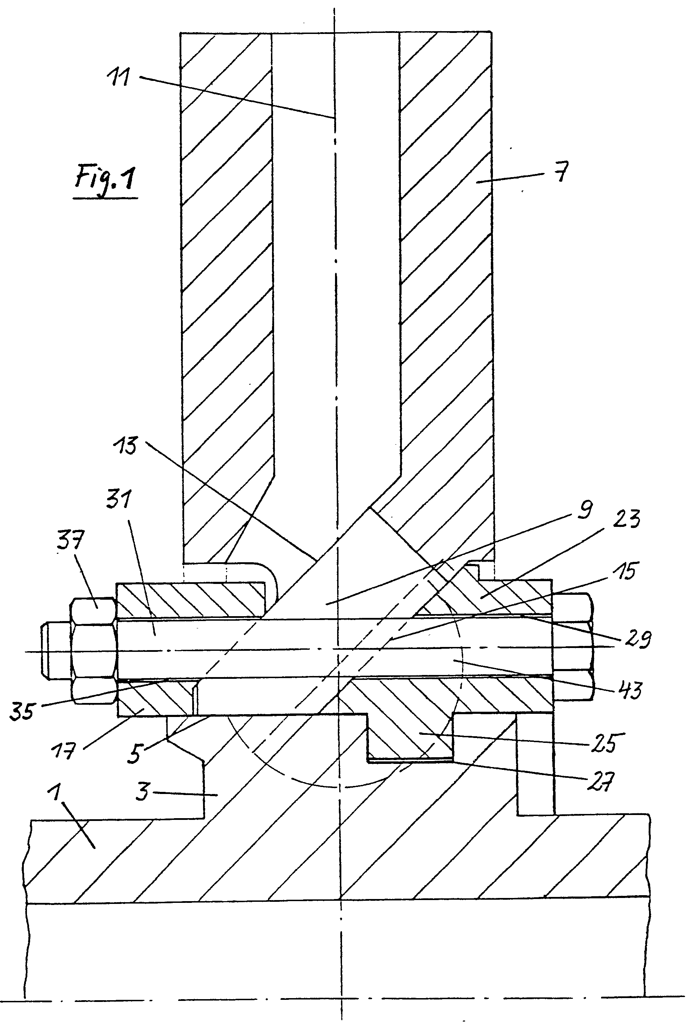

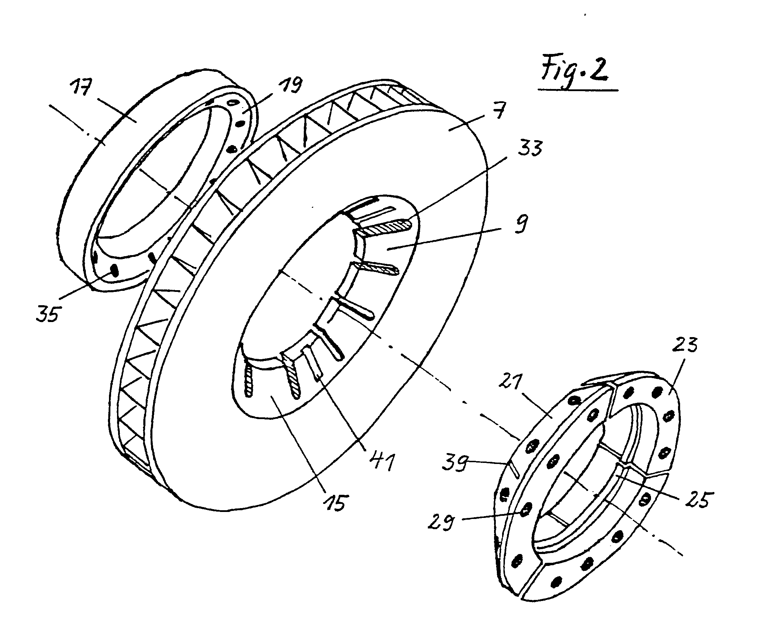

In Fig. 1 der Zeichnung ist in Schnittansicht ein Teil einer Welle 1 dargestellt, welche als Hohlwelle ausgebildet sein kann und gemäss der Erfindung einen umlaufenden Bund 3 mit einem zylindrischen Sitz 5 aufweist. Der Bund 3 mit seinem Sitz 5 wirkt als Tragkörper für den Reibring 7 der Bremsscheibe, welcher einen radial innen liegenden, als Mitnehmersteg ausgebildeten Flanschring 9 besitzt. Der Flanschring 9 ist beidseitig von geneigt zur Reibringradialebene 11 liegenden Ringflächen 13 und 15 begrenzt, wobei an der einen dieser im wesentlichen kegelmantelartigen Ringflächen ein Spannring 17 anliegt, derart, dass eine komplementär verlaufend ausgebildete Spannfläche 19 des Spannringes 17 gegenüber der Ringfläche 13 zu wirken vermag (Fig. 2). An der bezüglich der Ringfläche entgegengesetzten Ringfläche 15 des Flanschringes 9 liegt eine im wesentlichen komplementär ausgebildete Spannfläche 21 eines Nabenringes 23 an. Der Nabenring 23 greift mit einem umlaufenden, radial innen liegenden Bund 25 in eine umlaufende Nut 27 der Welle 1 ein, wie Fig. 1 veranschaulicht. Der Nabenring 23 ist geteilt, wobei er im dargestellten Ausführungsbeispiel aus drei Segmenten bzw. Abschnitten besteht. Jeder Abschnitt besitzt mehrere axial verlaufende Bohrungen 29 zur Aufnahme von Schraubbolzen 31, welche im Montagezustand die Bohrungen 29 der einzelnen Abschnitte des Nabenringes 23, örtlich zugeordnete Ausnehmungen 33 im Flanschring 9 des Reibringes 7 und entsprechende Bohrungen 35 im Spannring 17 durchsetzen, wobei den Schraubbolzen jeweils eine Mutter 37 zugeordnet ist. Es können auch andere Befestigungsmittel hierbei vorgesehen sein; so ist es auch möglich, dass der Schraubbolzen in Bohrungen mit Innengewinge eingreift, die sich im Spannring 17 befinden.

Die einzelnen Abschnitte des Nabenringes 23 sind fernerhin an ihrer dem Reibring zugeordneten Seite jeweils mit einer Ausfräsung 39 versehen, welcher eine entsprechende, axial gerichtet sich erstreckende Federnut im Bund 3 der Welle 1 und je eine Nut 41 des Flanschringes 9 entspricht. Im dargestellten Ausführungsbeispiel sind demnach jeweils drei Ausfräsungen 39 des Nabenringes 23, drei Nuten 41 am Flanschring 9 und drei entsprechende Federnuten (nicht dargestellt) im Bund 3 der Welle 1 vorgesehen. In die Federnuten des Bunds 3, in die Ausfräsungen 39 des Nabenringes 23 und in die Nuten 41 des Reibringes greifen Scheibenfedern 43 ein; auf diese Weise verbindet jede dieser Scheibenfedern 43 formschlüssig gleichzeitig die Welle 1, den Nabenring 23 und den Reibring 7. Anstelle der in Fig. 1 nur schematisch angedeuteten Scheibenfedern können auch andere, an sich bekannte Keile od. dgl. benutzt werden, um die formschlüssige Verbindung herbeizuführen. Die Nabenringsegmente, der Reibring und der Spannring sind axial durch die Schraubbolzen 31 verspannt; ein besonderer Vorteil der Segmentierung des Nabenringes besteht darin, dass sich die Scheibenfedern jeweils gleichzeitig, d.h. vereinfacht in die vorgesehenen Nuten bzw. Ausfräsungen fügen lassen. Durch die Schraubenvorspannkraft und die Aufteilung des Nabenringes in mehrere Abschnitte entsteht zwischen dem Nabenring und der Welle bzw. dem zylindrischen Sitz derselben eine Pressung und somit ein Reibschluss. Dieser Reibschluss dient zum Übertragen des Bremsmomentes und zur Übertragung von dynamischen Massenkräften zwischen Welle und Reibscheibe in axialer Richtung. Die vorgenannte Nutverzahnung zwischen dem Bund 25 und der Nut 27 dient zur formschlüssigen axialen Fixierung des Nabenringes 23 gegenüber der Welle 1 und zum Übertragen der vom Reibschluss nicht mehr aufzunehmenden dynamischen Massenkräfte in axialer Richtung. Die Zentrierung des Reibringes erfolgt durch den Nabenkegel und durch die als Dreibein wirkenden drei Scheibenfedern, welche gleichzeitig in die entsprechenden Nuten des Reibringes eingreifen.

Der Nabenring lässt sich nach Lösen seiner Schraubverbindungen und nach axialem Verschieben des Reibringes radial, d.h. segmentartig, ohne Hilfswerkzeuge demontieren. Dadurch ist es möglich, beliebig viele kegelzentrierte Bremsscheiben der beschriebenen Art auf eine Welle zu setzen, wodurch das Axialabschieben der Reibringe nach beiden Seiten und über die Enden der Wellen hinaus ermöglicht wird. Dabei können Wellen bzw. Flansche am Ende von Hohlwellen Durchmesser von der Grösse des Reibringkegeldurchmessers aufweisen. Ein weiterer Vorteil besteht darin, dass sämtliche dem Verschleiss unterworfenen Bauteile, d.h. der Reibring, der Spannring und der Nabenring, problemlos ausgetauscht werden können. Dennoch besitzt die Verbindung beschriebener Art alle Vorteile von kegelzentrierten Wellenbremsscheiben, welche eine sogenannte Monoblocknabe aufweisen.

Die infolge der Verwendung des geteilten Nabenringes bestehende Möglichkeit, den Reibring beidseitig, also beliebig von der Welle abzuziehen, besteht natürlich ungeachtet der jeweiligen Reibringkonstruktion; so ist die erfindungsgemässe Anordnung auch bei Reibringkonstruktionen gegeben, bei welchen sich der Flanschring nicht von einer Reibringhälfte (wie im dargestellten Ausführungsbeispiel), sondern von beiden Reibringhälften erstreckt. Die Erfindung ist auch nicht auf eine symmetrische Aufteilung des Nabenringes beschränkt, d.h. der Nabenring kann bei Bedarf Segmente von unterschiedlichem Bogenumfang aufweisen. Bei all derartigen Konstruktionen ist sichergestellt, dass der Nabenring von der Welle lösbar ist und dadurch der Reibring in beliebiger Richtung abgezogen werden kann.

Es ist auch eine Ausführungsform möglich, bei welcher ein Nabenring mehrteiliger Konstruktion vorgesehen ist. Der z.B. aus drei Teilen bestehende Nabenring ist dabei mit einem Innengewinde auf ein Aussengewinde des Bunds aufgeschraubt, wobei das Aufschrauben des Nabenringes vorzugsweise vorgenommen wird, wenn dieser in der den Bund umgebenden Lage zusammengesetzt ist. Die Verschraubung zwischen Nabenring und Bund vermittelt den erwünschten axialen Formschluss zwischen der Welle und dem Nabenring und demnach die axiale Sicherung des Reibringes auf der Welle.

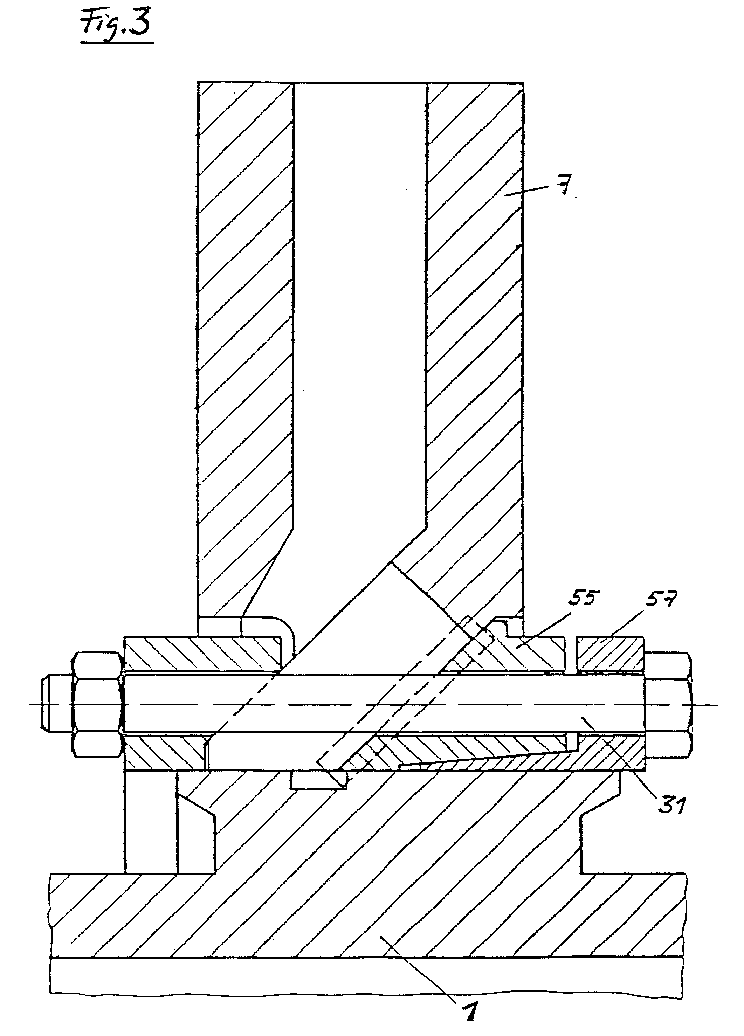

Bei der in Fig. 3 wiedergegebenen Variante der Reibringbefestigung ist ein kegeliger, einteiliger Nabenring 55 vorgesehen, welcher mit Hilfe von mehreren Passfedern formschlüssig mit dem Reibring in Verbindung steht. Diese Passfedern werden bei der Montage des Reibringes in die vorgesehenen Einfräsungen des Reibringes eingefügt, wonach der Nabenring mit den an ihm vorgesehenen Nuten bzw. Einfräsungen aufgeschoben wird. Die Passfedern können sich in zugeordnete Schlitze im Bund der Welle 1 erstrecken, wodurch zusätzlich ein Formschluss in Umfangsrichtung gewährleistet ist. In Axialrichtung wird die gesamte Anordnung durch den Reibschluss gehalten, welcher durch die Verspannung des Nabenringes und des Reibringes zwischen dem Spannring 17 und einem Hilfsring 57 aufgebracht wird.

## Patentansprüche

1. Bremsscheibenanordnung für Scheibenbremseinrichtungen von Schienenfahrzeugen, mit wenigstens einem Reibring (7), an welchem ein radial innen liegender, als Mitnehmersteg wirkender Flanschring (9) ausgebildet ist, mit einem Spannring (17), welcher an einer Seite des Flanschringes anliegend diesen gegenüber der Welle (1) der Bremsscheibenanordnung verspannt, mit einem Nabenring (23; 55, 57), welcher an der dem Spannring entgegengesetzten Seite des Flanschringes anliegt, und mit einem von der Welle (1) radial auskragenden, einen zylindrischen Sitz (5) aufweisenden Bund (3), an welchem der Flanschring mit Hilfe des Spannringes und des Nabenringes gehalten ist, dadurch gekennzeichnet, dass der Aussendurchmesser des zylindrischen Sitzes (5) auf seiner gesamten Axiallänge höchstens so gross ist wie der Innendurchmesser des Flanschringes (9), und dass der Nabenring (23; 55, 57) axial gesichert mittels einer lösbaren Befestigung am Flanschring (9) angreift.

2. Bremsscheibenanordnung nach Anspruch 1, dadurch gekennzeichnet, dass der Flanschring (9) von geneigt zur Reibringradialebene (11) liegenden, kegelmantelartigen und parallel zueinander verlaufenden Ringflächen (13, 15) begrenzt ist, dass der Innenumfang des Flanschringes (9) den zylindrischen Bund (3) umgreift, und dass an den beiden Ringflächen (13, 15) der Spannring (17) und der Nabenring (23; 55, 57) mit komplementär verlaufenden Spannflächen (19, 21) anliegen.

3. Bremsscheibenanordnung nach einem der Ansprüche 1 oder 2, dadurch gekennzeichnet, dass der Nabenring (23) in mehrere Abschnitte von gleichem Bogenumfang aufgeteilt ist, und dass sich Schraubbolzen (31) unter gleichem Winkelabstand axial durch die Abschnitte des Nabenringes, durch Ausnehmungen (33) im Flanschring (9) und durch Bohrungen des Spannringes (17) erstrecken, so dass der Spannring, der Reibring und der Nabenring durch auf die Schraubbolzen aufgesetzte Muttern (37) verspannbar sind.

4. Bremsscheibenanordnung nach einem der vorangehenden Ansprüche, gekennzeichnet durch eine vom Sitz (5) des Bunds (3) radial nach innen sich erstreckende Nut (27), in welche zur axialen Sicherung des Nabenringes (23) bzw. der Nabenringabschnitte je ein an diesen ausgebildeter Bund (25) eingreift.

5. Bremsscheibenanordnung nach Anspruch 1, dadurch gekennzeichnet, dass der Nabenring mittels Gewindeeingriff in Axialrichtung gegenüber dem Bund formschlüssig gesichert ist.

6. Bremsscheibenanordnung nach Anspruch 5, dadurch gekennzeichnet, dass der Nabenring aus mehreren Abschnitten besteht, und dass jeder der Abschnitte mittels eines Innengewindes in ein am Bund ausgebildetes Aussengewinde eingreift.

7. Bremsscheibenanordnung nach Anspruch 1, dadurch gekennzeichnet, dass der Nabenring (55) mittels eines verkeilenden Hilfsringes (57) gegenüber dem Flanschring (9) verspannbar ist, derart, dass die Reibringanordnung aus Reibring, Spannring und Nabenring mittels Reibschluss auf dem Bund (3) der Welle (1) gehalten ist.

8. Bremsscheibenanordnung nach Anspruch 7, dadurch gekennzeichnet, dass der Hilfsring (57) mittels eines keilförmigen Fortsatzes zwischen den Sitz (5) des Bunds (3) und den Nabenring (55) eingreift, und dass sich die Schraubbolzen (31) auch durch den Hilfsring (57) erstrecken.

9. Bremsscheibenanordnung nach einem der Ansprüche 1 bis 6, dadurch gekennzeichnet, dass die Welle (1), der Reibring (7) und der Nabenring (23) durch Scheibenfedern (43) formschlüssig gegeneinander gesichert sind.

10. Bremsscheibenanordnung nach Anspruch 9, dadurch gekennzeichnet, dass jeder der Abschnitte des Nabenringes (23) eine zur Aufnahme einer Scheibenfeder (43) dienende Ausfräsung (39) aufweist, und dass im Bund (3) der Welle und am Reibring (7) entsprechende Nuten zur Aufnahme der Scheibenfedern ausgebildet sind.

## Claims

1. Brake disc arrangement for disc brake devices of rail vehicules, with at least one friction ring (7), on which there is constructed an annular flange (9) lying radially inwards and working as a driving web, with a clamping ring (17) which, abutting one side of the annular flange, braces this with respect to the shaft (1) of the brake disc arrangement, with a hub ring (23; 55, 57) which abuts the side of the annular flange opposite the clamping ring, and with a collar (3) jutting out radially from the shaft (1) and having a cylindrical seat (5), on which collar the annular flange is held by means of the clamping ring and the hub ring, characterised in that the outer diameter of the cylindrical seat (5), over its entire axial length, is at the most as large as the inner diameter of the annular flange (9), and in that the hub ring (23; 55, 57), axially secured by means of a detachable fastening, engages on the annular flange (9).

2. Brake disc arrangement according to Claim 1, characterised in that the annular flange (9) is limited by annular surfaces (13, 15) lying inclined to the friction ring radial plane (11), like a cone-shaped shell, and running parallel to one another, in that the inner circumference of the annular flange (9) surrounds the cylindrical collar (3), and in that the clamping ring (17) and the hub ring (23; 55, 57) abut both the annular surfaces (13, 15) with complementarily running clamping surfaces (19, 21).

3. Brake disc arrangement according to one of Claims 1 or 2, characterised in that the hub ring (23) is divided into several sections of the same arcuate extent, and in that screw bolts (31), at the same angular distance, extend axially through the sections of the hub ring, through recesses (33) in the annular flange (9) and through bores of the clamping ring (17), so that the clamping ring, the friction ring and the hub ring can be braced by nuts (37) positioned on the screw bolts.

4. Brake disc arrangement according to one of the preceding claims, characterised by a groove (27) extending radially inwards from the seat (5) of the collar (3), into which groove, for the axial securing of the hub ring (23) or the hub ring sections, there engages a collar (25) constructed on these.

5. Brake disc arrangement according to Claim 1, characterised in that the hub ring is positively secured, in the axial direction with respect to the collar, by means of threaded engagement.

6. Brake disc arrangement according to Claim 5, characterised in that the hub ring comprises several sections, and in that each of the sections engages, by means of an inner thread, into an outer thread constructed on the collar.

7. Brake disc arrangement according to Claim 1, characterised in that the hub ring (55) can be braced by means of a wedging auxiliary ring (57) with respect to the annular flange (9), in such a way that the friction ring arrangement of friction ring, clamping ring and hub ring is held on the collar (3) of the shaft (1) by means of frictional engagement.

8. Brake disc arrangement according to Claim 7, characterised in that the auxiliary ring (57) engages between the seat (5) of the collar (3) and the hub ring (55) by means of a wedge-shaped extension, and in that the screw bolts (31) also extend through the auxiliary ring.

9. Brake disc arrangement according to one of Claims 1 to 6, characterised in that the shaft (1), the friction ring (7) and the hub ring (23) are positively secured against one another by disc springs (43).

10. Brake disc arrangement according to Claim 9, characterised in that each of the sections of the hub ring (23) has a milled-out portion (39) used for receiving a disc spring (43), and in that, in the collar (3) of the shaft and on the friction ring (7), corresponding grooves are formed for receiving the disc springs.

## Revendications

1. Agencement de disque de frein pour des installations de freins à disques de véhicules sur rails, avec au moins un anneau de friction (7) sur lequel est formé un anneau de bride (9) situé radialement à l'intérieur et agissant comme barette d'entraînement, avec un anneau de serrage (17) qui, s'appliquant contre un côté de l'anneau de bride, serre celui-ci par rapport à l'arbre (1) de l'agencement de disque de frein, avec un anneau de moyeu (23; 55, 57), qui porte contre le côté de l'anneau de bride qui est situé à l'opposé de l'anneau de serrage, et avec une collerette (3) possédant une portée cylindrique (5) et radialement en saillie sur l'arbre (1), collerette sur laquelle est maintenu l'anneau de bride, à l'aide de l'anneau de serrage et de l'anneau de moyeu, caractérisé par le fait que le diamètre extérieur de la portée cylindrique (5) est, sur toute sa longueur, au maximum aussi grand que le diamètre intérieur de l'anneau de bride (9), et que l'anneau de moyeu (23; 55, 57) attaque l'anneau de bride (9) avec sécurité axiale, à l'aide d'une fixation détachable.

2. Agencement de disque de frein selon la revendication 1, caractérisé par le fait que l'anneau de bride (9) est limité par des surfaces annulaires (13, 15) se présentant sous forme d'enveloppes tronconiques s'étendant parallèlement les unes aux autres et inclinées sur le plan radial de l'anneau de friction (11), que la périphérie intérieure de l'anneau de bride (9) entoure la collerette cylindrique (3), et que contre les deux surfaces annulaires (13, 15) prennent appui, par des surfaces de serrage complémentaires (19, 21), l'anneau de serrage (17) et l'anneau de moyeu (23; 55, 57).

3. Agencement de disque de frein selon l'une des revendications 1 ou 2, caractérisé par le fait que l'anneau de moyeu (23) est subdivisé en plusieurs sections d'un même arc, et que des boulons (31) s'étendent, avec un même intervalle angulaire, axialement à travers les sections de l'anneau de moyeu, à travers des ouvertures (33) ménagées dans l'anneau de bride (9) et à travers des perçages de l'anneau de serrage (17), la réalisation étant telle que l'anneau de serrage, l'anneau de friction et l'anneau de moyeu sont susceptibles d'être serrés à l'aide d'écrous (37) montés sur les boulons.

4. Agencement de disque de frein selon l'une des revendications précédentes, caractérisé par une gorge (27) s'étendant radialement vers l'intérieur à partir de la portée (5) de la collerette (3), et dans laquelle pénètrent, pour la fixation axiale de l'anneau de moyeu (23) ou des sections de l'anneau de moyeu, des collerettes (5) qui sont ménagées, respectivement, sur l'anneau de moyeu ou sur les sections de l'anneau de moyeu.

5. Agencement de disque de frein selon la revendication 1, caractérisé par le fait que l'anneau de moyeu est assuré, par une liaison par formes complémentaires, axialement par rapport à la collerette, à l'aide de moyeux filetés.

6. Agencement de disque de frein selon la revendication 5, caractérisé par le fait que l'anneau de moyeu est constitué par plusieurs sections, et que chacune des sections pénètre, à l'aide d'un filetage intérieur, dans un filetage extérieur réalisé sur la collerette.

7. Agencement de disque de frein selon la revendication 1, caractérisé par le fait que l'anneau de moyeu (55) est susceptible d'être serré, par rapport à l'anneau de bride (9), à l'aide d'un anneau auxiliaire de coincement (57), la réalisation étant telle que l'agencement à anneau de friction, constitué par l'anneau de friction, l'anneau de serrage et l'anneau de moyeu, est maintenu, par assemblage à friction, sur la collerette (3) de l'arbre (1).

8. Agencement de disque de frein selon la revendication 7, caractérisé par le fait que l'anneau auxiliaire (57) pénètre, à l'aide d'un appendice cunéiforme, entre la portée (5) de la collerette (3) et l'anneau de moyeu (55), et que les boulons (31) s'étendent également à travers l'anneau auxiliaire (57).

9. Agencement de disque de frein selon l'une des revendications 1 à 6, caractérisé par le fait que l'arbre (1), l'anneau de friction (7) et l'anneau de moyeu (23) sont assurés les uns par rapport aux autres, et par une liaison par formes complémentaires, à l'aide de rondelles élastiques (43).

10. Agencement de disque de frein selon la revendication 9, caractérisé par le fait que chacune des sections de l'anneau de moyeu (23) présente un fraisage (39) qui sert à recevoir l'une des rondelles élastiques (43), et que dans la collerette (3) de l'arbre et sur l'anneau de friction (7) sont réalisées des gorges correspondantes pour recevoir les rondelles élastiques.

0 065 312

Fig.1

Fig. 2

Fig.3